# NOUVEAU FASCICULE DE BREVET EUROPEEN

(11) **EP 1 529 720 B2**
(45) Date de publication et mention de la décision concernant l'opposition: **24.09.2014**
(45) Mention de la délivrance du brevet: 05.09.2007
(21) Numéro de dépôt: 04300741.8
(22) Date de dépôt: 28.10.2004
(51) Int. Cl.: B62D 25/14

(54) **Tube de structure de véhicule**
Strukturelles Rohrbauteil für ein Kraftfahrzeug
Structural beam for vehicle

(30) Priorité: 04.11.2003 FR 0312910
(43) Date de publication de la demande: 11.05.2005
(73) Titulaire: Renault s.a.s., 92100 Boulogne Billancourt (FR)
(72) Inventeur: Perrin, Laurent, 78000 Versaiiles (FR)
(74) Mandataire: Gevers France

(56) Documents cités:
- DE-A- 10 214 473
- US-A1- 2003 084 948
- US-B1- 6 391 470

## Description

La présente invention se rapporte à un tube de structure de véhicule. Elle concerne en particulier un tel tube comportant un premier tronçon qui présente une première dimension intérieure et un deuxième tronçon d'extrémité qui présente une deuxième dimension intérieure et qui est adapté à recevoir un autre tube.

L'utilisation d'un tel tube est connue dans une poutre de structure de véhicule, en particulier dans une poutre formant une traverse de fixation d'un cockpit de véhicule, ladite poutre étant fixée entre deux montants verticaux de la structure du véhicule.

Dans un premier exemple connu de réalisation d'un tel tube pour une telle poutre, le premier tronçon est adaptée à recevoir des organes de fixation d'une colonne de direction du véhicule. L'autre tube, dont le diamètre extérieur correspond au diamètre intérieur du tronçon d'extrémité, est emmanché dans le tronçon d'extrémité, les deux tubes étant coaxiaux et solidarisés par soudage. Le diamètre intérieur de l'un des tubes doit correspondre au diamètre extérieur de l'autre des tubes, au détriment du choix de dimensionnement des tubes et des possibilités d'allègement du véhicule. De plus, un tel assemblage nécessite de disposer de deux tubes coaxiaux, au détriment de la liberté d'architecture du cockpit.

Dans un deuxième exemple connu de réalisation d'un tel tube pour une poutre formant une traverse de fixation de cockpit de véhicule, le premier tronçon et le deuxième tronçon sont raccordés par un troisième tronçon dont la dimension intérieure diminue progressivement, ce qui permet une plus grande liberté dans le choix du diamètre des tubes, qui sont toujours coaxiaux.

Il est aussi connu de réaliser une poutre dont les deux tubes ne sont pas coaxiaux. Dans ce cas, les tubes sont assemblés entre eux par l'intermédiaire d'une plaque transversale aux tubes, l'extrémité de chacun des tubes étant soudée sur ladite plaque. Ce mode de réalisation d'une poutre de structure de véhicule présente pour inconvénient de multiplier le nombre de pièces nécessaires à la fabrication de la poutre et le nombre de points de soudure, au moins au détriment du coût de fabrication.

Un exemple de cette technique antérieure est divulgué par les documents US 6391470 et US 2002084948 et par un tube de structure d'une Honda Accord 4D, Année de construction 1999 à 2002.

Le but de l'invention est d'améliorer un tel tube, en particulier d'améliorer un tel tube utilisé dans une poutre formant une traverse de fixation d'un cockpit de véhicule.

Dans ce but, l'invention propose un tube de structure de véhicule selon la revendication 1.

Une partie de paroi du deuxième tronçon peut être aplatie vers l'extérieur. La partie aplatie peut comporter un pli extérieur dont au moins une portion est saillante par rapport au contour du premier tronçon. La partie aplatie peut être un renfort du tube. La partie aplatie peut être un support de fixation.

L'axe du deuxième tronçon est décalé par rapport à l'axe du premier tronçon, l'axe du troisième tronçon n'est pas parallèle à l'axe du premier tronçon et à l'axe du deuxième tronçon. Les axes du premier tronçon et du deuxième tronçon peuvent être parallèles.

Une partie de la surface interne du premier tronçon est alignée avec une partie de la surface interne du deuxième tronçon, les premier et deuxième tronçons étant préférentiellement cylindriques.

L'invention concerne aussi un véhicule comportant un premier tube de structure assemblé avec un deuxième tube de structure, les deux tubes étant raccordés à la structure du véhicule et étant une traverse de fixation d'un cockpit du véhicule, caractérisé en ce que premier tube de structure est tel que défini précédemment, un tronçon de tube pouvant comporter un coude.

La présente invention va maintenant être décrite par un exemple de réalisation non limitatif, en liaison avec les dessins annexés sur lesquels :

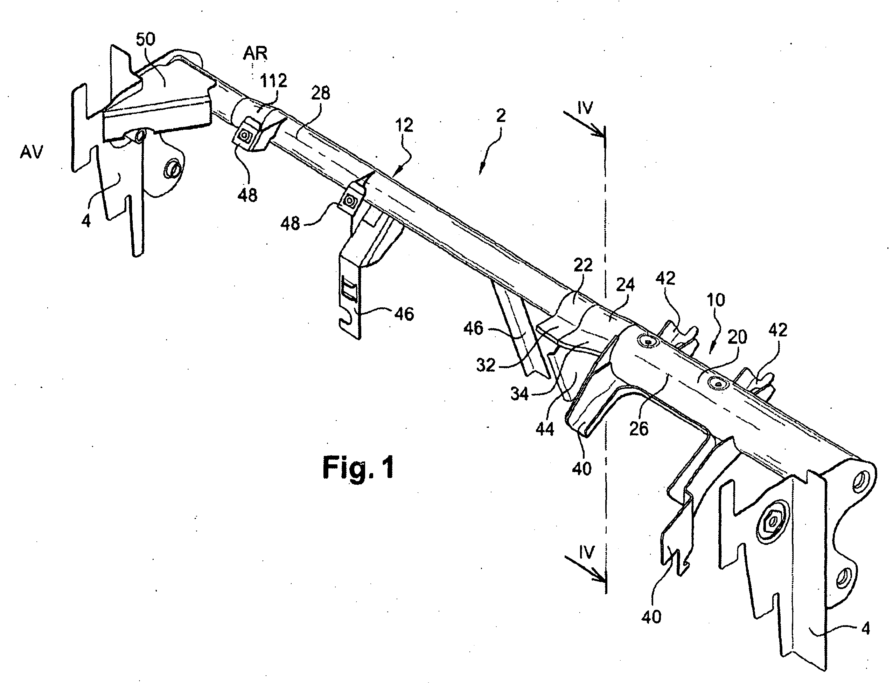

- la figure 1 est vue en perspective de trois quarts avant d'un tube selon l'invention utilisé dans une poutre formant une traverse de fixation d'un cockpit de véhicule,

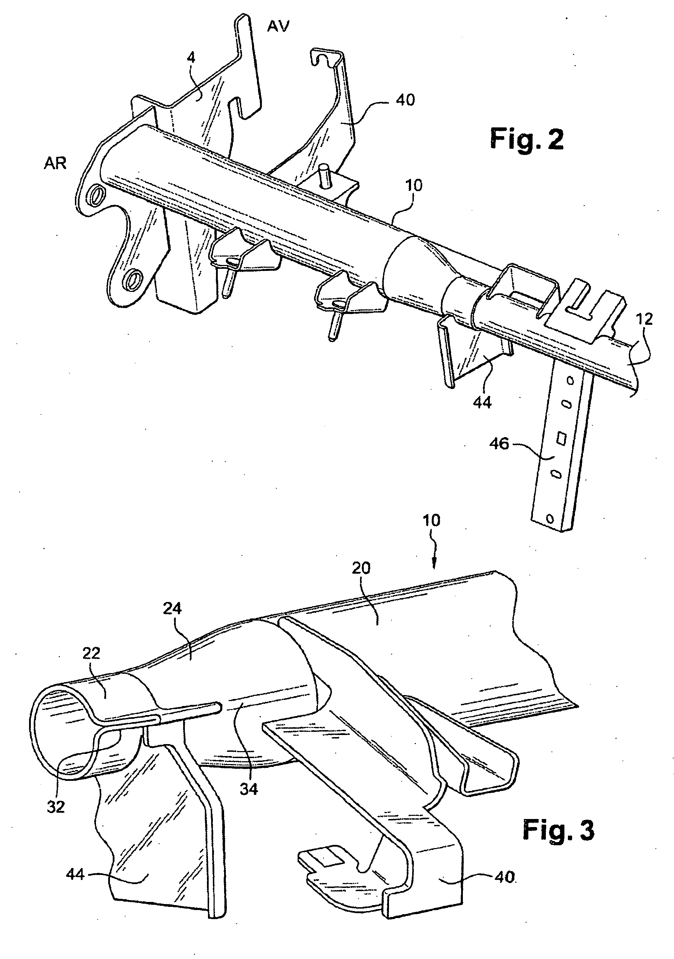

- la figure 2 est une vue partielle de trois quarts arrière de la poutre de la figure 1,
- la figure 3 est une vue partielle en perspective de trois quarts avant d'un tube selon l'invention,

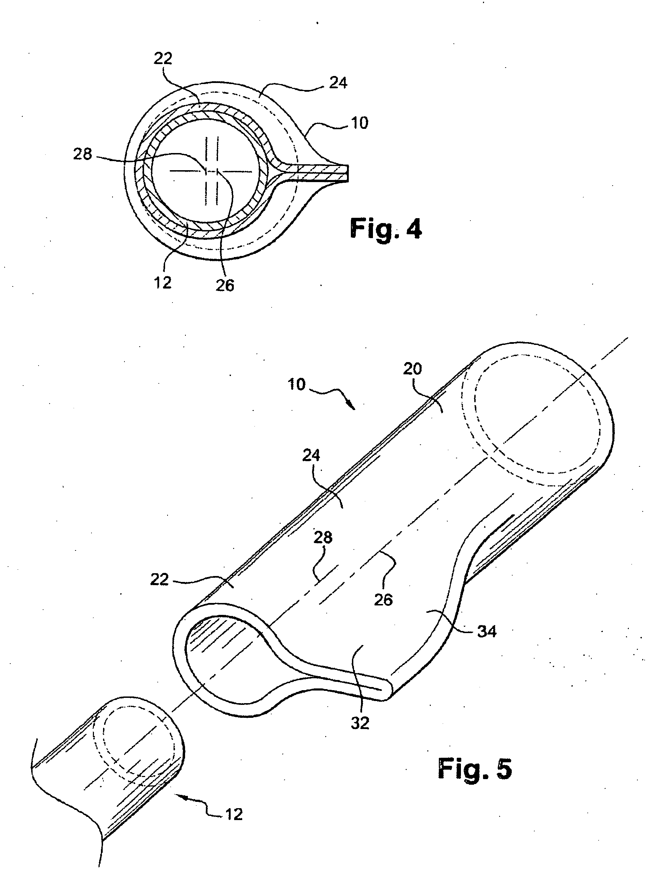

la figure 4 est une vue en coupe selon le plan IV-IV de la figure 1,
la figure 5 est une vue partielle en éclaté de la poutre de la figure 1..

Dans un véhicule, une poutre 2 formant une traverse est souvent utilisée pour la fixation d'un cockpit dans le véhicule, ainsi que pour former une armature de ce cockpit. Une telle poutre 2 est généralement fixée entre deux montants verticaux de la structure du véhicule. La poutre 2 est fixée sur les montants par l'intermédiaire de flasques latéraux 4. La poutre comporte côté conducteur un premier tube 10 sensiblement cylindrique muni d'organes de fixation de la colonne de direction du cockpit. La poutre comporte côté passager un deuxième tube 12 sensiblement cylindrique muni par exemple d'organes de fixation de l'appareil de climatisation et de la planche de bord du cockpit.

Les premier et deuxième tubes 10 et 12 sont assemblés entre eux à leur extrémité opposée à celle sur laquelle sont fixés les flasques 4. Le tube 12 est emmanché dans le tube 10.

Selon l'invention, comme représenté sur les figures, le premier tube 10 de structure de véhicule comporte un premier tronçon 20 qui présente une première dimension intérieure. Le premier tronçon 20, dont le diamètre est le plus important de la poutre 2, est destiné à recevoir les organes de fixation de la colonne de direction.

Le tube 10 comporte un deuxième tronçon d'extrémité 22 qui présente une deuxième dimension intérieure inférieure à la première dimension intérieure. Le tronçon d'extrémité 22 est adapté à recevoir le deuxième tube 12.

Le premier tronçon 20 et le tronçon d'extrémité 22 sont raccordés par un troisième tronçon 24 dont la dimension intérieure diminue progressivement et dont l'axe n'est pas parallèle à l'axe 26 du premier tronçon 20 et à l'axe 28 du deuxième tronçon 22. Dans l'exemple représenté, les axes 26 et 28 sont parallèles et sont décalés longitudinalement. Le terme longitudinalement est défini par rapport à la direction longitudinale du véhicule. Sur les figures, l'avant est indiqué par la référence AV et l'arrière est indiqué par la référence AR.

Les restrictions de diamètre du deuxième tronçon 22 et du troisième tronçon 24 par rapport au diamètre du premier tronçon 20 du tube 10 sont obtenues par pliage d'une partie périphérique du tube 10. Une partie 32 de paroi du deuxième tronçon 22 ainsi qu'une partie 34 de paroi du troisième tronçon 24 sont aplaties vers l'extérieur. Au moins un tronçon de partie aplatie du tube 10 comporte un pli extérieur saillant par rapport au contour du premier tronçon 20. Avantageusement, la partie aplatie est un renfort du tube 10. Une partie de la surface intérieure du tronçon d'extrémité 22 est alignée avec une partie de la surface intérieure du premier tronçon 20, la partie correspondante de la surface intérieure du troisième tronçon étant aussi alignée avec les parties précitées. Une partie du tube 10 n'est donc pas déformée.

La poutre 2 comporte des premiers organes avant 40 de fixation de colonne de direction et des deuxièmes organes arrière 42 de fixation de colonne de direction fixés sur le premier tronçon 20. Un point de fixation de la planche de bord peut être aménagé sur les organes 40 et 42. La poutre 2 comporte une plaque 44 de fixation de colonne de direction et de planche de bord, la plaque 44 étant fixée transversalement sur le tronçon d'extrémité 22. La partie aplatie 32 du tronçon 22 forme un support de fixation pour la plaque 44. La plaque 44 peut comporter un point de fixation de la planche de bord ou d'un tableau de commande du cockpit.

La poutre 2 comporte des bras 46 de fixation d'un appareil de climatisation du cockpit. Les bras 46 sont fixés sur le tube 12. Les bras 46 peuvent aussi comporter un point de fixation de la poutre sur un élément de structure du véhicule.

La poutre 2 comporte des pattes 48 de fixation de la planche de bord, fixées sur le tube 12. La poutre 2 comporte une plaque de renfort 50 montée entre le tube 12 et le flaque 4 situé côté passager.

Dans un soucis d'adaptation à la géométrie de la structure du véhicule en fonction d'éléments du cockpit, explicités plus loin, un tronçon d'extrémité du tube 12 comporte un coude 112 à proximité du flasque 4. L'extrémité du tube 12 à proximité du flasque 4 n'est pas coaxiale avec l'axe 28, le coude 112 permettant de raccorder la portion de tube selon l'axe 28 avec le flasque 4 quand la direction de l'axe 28 ne permet pas un raccordement simple sur une portion du flasque adaptée au raccordement. Dans un mode de réalisation non représenté, le coude n'est pas situé à l'extrémité du tube 12, mais par exemple au milieu du tube 12.

La poutre 2 est fabriquée selon le procédé suivant, à partir de tubes 10 et 12 de diamètres différents. Le tube 10 est placé en correspondance avec un gabarit d'emboutissage cylindrique de diamètre extérieur égal à celui du tube 12. Le tube 10 est embouti sur le gabarit pour former les parties aplaties 32 et 34. Le gabarit est ensuite retiré du tube 10, puis le tube 12 est emmanché dans le tronçon d'extrémité 22 du tube 10, auquel il est soudé. Les flasques 4, le renfort 50, les organes 40 et 42, la plaque 44, les bras 46 et pattes 48 sont ensuite soudées sur les tubes 10 et 12.

La poutre 2 peut ensuite recevoir les divers éléments du cockpit, à savoir au moins la colonne de direction munie du volant, l'appareil de climatisation, la planche de bord avec l'instrumentation et les tableaux de commande. Le cockpit complet est ensuite monté sur la structure du véhicule.

Le premier tube doit être suffisamment résistant pour supporter les efforts résultant de la fixation de la colonne de direction, en particulier en cas de choc lors d'un violent accident. L'assemblage des deux tubes doit également être suffisamment résistant pour supporter les efforts précités. Le tube selon l'invention permet de disposer d'une poutre porteuse pour un cockpit de véhicule satisfaisant avantageusement des critères de résistance mécanique et de dimensionnement des tubes, de facilité de fabrication, de liberté d'architecture du cockpit...

## Revendications

1. Tube (10) de structure de véhicule comportant un premier tronçon (20) qui présente une première dimension intérieure et un deuxième tronçon (22) d'extrémité qui présente une deuxième dimension intérieure et qui est adapté à recevoir un autre tube (12), le premier tronçon (20) et le deuxième tronçon (22) étant raccordés par un troisième tronçon (24) dont la dimension intérieure diminue progressivement, une partie de paroi (34) du troisième tronçon étant aplatie vers l'extérieur sous forme de pli,
**caractérisé en ce que** l'axe (28) du deuxième tronçon (22) est décalé par rapport à l'axe (26) du premier tronçon (20), l'axe du troisième tronçon (24) n'étant pas parallèle à l'axe du premier tronçon et à l'axe du deuxième tronçon.

2. Tube selon la revendication 1, **caractérisé en ce qu'**une partie (32) de paroi du deuxième tronçon (22) est aplatie vers l'extérieur.

3. Tube selon l'une quelconque des revendications précédentes, **caractérisé en ce que** la partie aplatie (32, 34) comporte un pli extérieur dont au moins une portion est saillante par rapport au contour du premier tronçon (20).

4. Tube selon l'une quelconque des revendications précédentes, **caractérisé en ce que** la partie aplatie (32, 34) est un renfort du tube.

5. Tube selon l'une quelconque des revendications précédentes, **caractérisé en ce que** la partie aplatie (32, 34) est un support de fixation.

6. Tube selon l'une quelconque des revendications précédentes, **caractérisé en ce que** les axes (26, 28) du premier tronçon (20) et du deuxième tronçon (22) sont parallèles.

7. Tube selon l'une quelconque des revendications précédentes, **caractérisé en ce qu'**une partie de la surface interne du premier tronçon (20) est alignée avec une partie de la surface interne du deuxième tronçon (22), les premier et deuxième tronçons étant préférentiellement cylindriques.

8. Véhicule comportant un premier tube (10) de structure assemblé avec un deuxième tube (12) de structure, les deux tubes étant raccordés à la structure du véhicule et étant une traverse de fixation d'un cockpit du véhicule, **caractérisé en ce que** premier tube (10) de structure est selon l'une quelconque des revendications précédentes.

9. Véhicule selon la revendication précédente, **caractérisé en ce qu'**un tronçon de tube (12) comporte un coude (112).

## Patentansprüche

1. Strukturelles Rohrbauteil (10) für ein Kraftfahrzeug, umfassend einen ersten Abschnitt (20), der eine erste Innenabmessung aufweist, und einen zweiten Endabschnitt (22), der eine zweite Innenabmessung aufweist und der ein weiteres Rohr (12) aufnehmen kann, wobei der erste Abschnitt (20) und der zweite Abschnitt (22) durch einen dritten Abschnitt (24) verbunden sind, dessen Innenabmessung sich progressiv verringert, und wobei ein Wandteil (34) des dritten Abschnitts nach außen in Form eines Falzes abgeflacht ist, **dadurch gekennzeichnet, dass** die Achse (28) des zweiten Abschnitts (22) zur Achse (26) des ersten Abschnitts (20) versetzt ist, wobei die Achse des dritten Abschnitts (24) nicht parallel zur Achse des ersten Abschnitts und zur Achse des zweiten Abschnitts ist.

2. Rohr nach Anspruch 1, **dadurch gekennzeichnet, dass** ein Wandteil (32) des zweiten Abschnitts (22) nach außen abgeflacht ist.

3. Rohr nach einem der vorhergehenden Ansprüche, **dadurch gekennzeichnet, dass** der abgeflachte Teil (32, 34) einen Außenfalz umfasst, von dem mindestens ein Abschnitt in Bezug zur Kontur des ersten Abschnitts (20) überragend ist.

4. Rohr nach einem der vorhergehenden Ansprüche, **dadurch gekennzeichnet, dass** der abgeflachte Teil (32, 34) eine Verstärkung des Rohrs ist.

5. Rohr nach einem der vorhergehenden Ansprüche, **dadurch gekennzeichnet, dass** der abgeflachte Teil (32, 34) ein Befestigungsträger ist.

6. Rohr nach einem der vorhergehenden Ansprüche, **dadurch gekennzeichnet, dass** die Achsen (26, 28) des ersten Abschnitts (20) und des zweiten Abschnitts (22) parallel sind.

7. Rohr nach einem der vorhergehenden Ansprüche, **dadurch gekennzeichnet, dass** ein Teil der Innenfläche des ersten Abschnitts (20) mit einem Teil der Innenfläche des zweiten Abschnitts (22) ausgerichtet ist, wobei der erste und der zweite Abschnitt vorzugsweise zylindrisch sind.

8. Fahrzeug, umfassend ein erstes strukturelles Rohrbauteil (10), das mit einem zweiten strukturellen Rohrbauteil (12) zusammengebaut ist, wobei die beiden Rohre mit der Struktur des Fahrzeugs verbunden sind und eine Befestigungsquerstrebe eines Cockpits des Fahrzeugs sind, **dadurch gekennzeichnet, dass** das erste strukturelle Rohrbauteil (10) nach einem der vorhergehenden Ansprüche ausgeführt ist.

9. Fahrzeug nach dem vorhergehenden Anspruch, **dadurch gekennzeichnet, dass** ein Rohrabschnitt (12) einen Knick (112) umfasst.

## Claims

1. Structural tube (10) for a vehicle, comprising a first section (20) which has a first inside dimension and a second end section (22) which has a second inside dimension and which is designed to receive another tube (12), the first section (20) and the second section (22) being connected by a third section (24) whose inside dimension decreases progressively, a wall part (34) of the third section being flattened outwardly in the form of a fold,
**characterised in that** the axis (28) of the second section (22) is offset with respect to the axis (26) of the first section (20), the axis of the third section (24) not being parallel to the axis of the first section and to the axis of the second section.

2. Tube according to claim 1, **characterized in that** a wall part (32) of the second section (22) is flattened outwardly.

3. Tube according to either one of the preceding claims, **characterized in that** the flattened part (32, 34) comprises an outer fold of which at least one portion projets with respect to the outline of the second section (20).

4. Tube according to any one of the preceding claims, **characterized in that** the flattened part (32, 34) is a reinforcement of the tube.

5. Tube according to any one of the preceding claims, **characterized in that** the flattened part (32, 34) is a fastening support.

6. Tube according to any one of the preceding claims, **characterized in that** the axes (26, 28) of the first section (20) and the second section (22) are parallel.

7. Tube according to any one of the preceding claims, **characterized in that** part of the internal surface of the first section (20) is aligned with part of the internal surface of the second section (22), the first and second sections preferably being cylindrical.

8. Vehicle comprising a first structural tube (10) assembled with a second structural tube (12), the two tubes being connected to the structure of the vehicle and being a crossmember for fastening a vehicle cockpit, **characterized in that** the first structural tube (10) is as according to any one of the preceding claims.

9. Vehicle according to the preceding claim, **characterized in that** a section of the tube (12) comprises an elbow (112).
